# EUROPÄISCHE PATENTSCHRIFT

(11) **EP 2 035 276 B1**
(45) Veröffentlichungstag und Bekanntmachung des Hinweises auf die Patenterteilung: **23.02.2011**
(21) Anmeldenummer: 07722150.5
(22) Anmeldetag: 31.03.2007
(51) Int. Cl.: B64C 27/10, B64C 27/20

(54) **FLUGGERÄT**
AIRCRAFT
AÉRONEF

(30) Priorität: 26.06.2006 DE 102006029603
(43) Veröffentlichungstag der Anmeldung: 18.03.2009
(73) Patentinhaber: Wiggerich, Burkhard, 59757 Arnsberg (DE)
(72) Erfinder: Wiggerich, Burkhard, 59757 Arnsberg (DE)
(74) Vertreter: Graefe, Jörg
(86) Internationale Anmeldenummer: PCT/DE2007/000592
(87) Internationale Veröffentlichungsnummer: WO 2008/000203

(56) Entgegenhaltungen:
- WO-A-2006/112578
- DE-A1-102005 010 336
- DE-U1- 20 120 758
- DE-U1-202005 004 698
- FR-A3- 2 146 918
- US-A1- 2006 016 930
- US-A1- 2006 049 304

## Beschreibung

Die vorliegende Erfindung bezieht sich auf ein Fluggerät, das mindestens drei Antriebseinheiten, die jeweils einen ersten Rotor und einen ersten drehzahlgesteuerten Elektromotor aufweisen, geeignet, den ersten Rotor während des Betriebs des Fluggeräts anzutreiben, sowie Mittel zur autonomen Lage- und Positionsregelung des Fluggeräts umfasst.

Fluggeräte der eingangs genannten Art sind aus dem Stand der Technik in verschiedenen Ausführungsformen bereits bekannt. Beispielsweise soll an dieser Stelle auf ein bereits vor mehreren Jahren entwickeltes, als Mikrodrohne ausgeführtes Fluggerät eingegangen werden, das vier Antriebseinheiten mit jeweils einem Rotor zur Erzeugung eines Auftriebs aufweist. Darüber hinaus umfasst das bekannte Fluggerät eine elektronische Lageregelung, die beispielsweise bewirkt, dass das Fluggerät eine Schwebefluglage einnehmen kann. Eine Steuerung des Fluggeräts ist durch eine Änderung der Drehzahlen der Elektromotoren möglich, wobei jeder Elektromotor von einer zentralen Steuereinheit einzeln angesteuert wird. Ein solcher Stand der Technik ist durch DE 10 2005 010 336 A1 gegeben.

Ein Nachteil der aus dem Stand der Technik bekannten vierrotorigen Fluggeräte besteht darin, dass diese verhältnismäßig groß ausgeführt sind, um eine bestimmte Nutzlast transportieren zu können.

Ein Fluggerät der eingangs genannten Art ist zudem aus der US 2006/049304 A1 bekannt. Dabei ist ein Flügel in Tragflächenform vorgesehen, um dem Fluggerät Auftrieb zu geben. Das Fluggerät weist ferner Seiten-Winglets und Seitenruder für eine aerodynamische Stabilität und Steuerung auf. Zwingend erforderlich, um die Bewegung des Fluggeräts zu steuern, ist eine Steuerklappenanordnung, die in jeder der Antriebseinheiten vorgesehen ist. Diese Steuerklappenanordnung weist unterhalb des Rotors beziehungsweise unterhalb der beiden Rotoren (wenn die Antriebseinheit zwei Rotoren aufweist) zwei orthogonal zueinander angeordnete, um ihre Längsachsen schwenkbare Steuerklappen auf, um Flugmanöver und Translationsbewegungen des Fluggeräts in der horizontalen Ebene zu ermöglichen. Somit erfordert das aus der vorstehend genannten Druckschrift bekannte Fluggerät stets Seiten-Winglets, Seitenruder und eine Steuerklappenanordnung mit zwei verstellbaren Steuerklappen in jeder der Antriebseinheiten, damit das Fluggerät überhaupt flugfähig ist. Entsprechend kompliziert ist der konstruktive Aufbau des Fluggeräts.

Hier setzt die vorliegende Erfindung an.

Der vorliegenden Erfindung liegt die Aufgabe zugrunde, ein Fluggerät der eingangs genannten Art zur Verfügung zu stellen, das unter Beibehaltung der Nutzlast kompakter als die aus dem Stand der Technik bekannten vierrotorigen Fluggeräte ausgeführt ist.

Die Lösung dieser Aufgabe liefert ein Fluggerät der eingangs genannten Art mit den Merkmalen des kennzeichnenden Teils des Anspruchs 1. Die Unteransprüche betreffen vorteilhafte Weiterbildungen der vorliegenden Erfindung.

Gemäß Anspruch 1 zeichnet sich ein erfindungsgemäßes Fluggerät dadurch aus, dass jede der Antriebseinheiten mindestens einen zweiten Rotor und mindestens einen zweiten drehzahlgesteuerten Elektromotor aufweist, geeignet, den zweiten Rotor während des Betriebs des Fluggeräts in einer Drehrichtung anzutreiben, die entgegengesetzt zur Drehrichtung des ersten Rotors der jeweiligen Antriebseinheit ist, wobei die Drehzahlen der Elektromotoren jeder der mindestens drei Antriebseinheiten individuell veränderbar sind.

Anstelle von vier Antriebseinheiten mit jeweils einem Rotor weist das erfindungsgemäße Fluggerät mindestens drei Antriebseinheiten mit jeweils mindestens zwei Rotoren auf, die paarweise gegenläufig angetrieben werden. Der Vorteil dieser Maßnahme besteht darin, dass das Fluggerät unter Beibehaltung der Nutzlast kompakter als die aus dem Stand der Technik bekannten Fluggeräte ausgeführt werden kann. Der Durchmesser des Fluggeräts kann durch diese Maßnahme in vorteilhafter Weise um etwa 30 % reduziert werden. Dadurch, dass mindestens drei Antriebseinheiten mit jeweils zwei Rotoren vorgesehen sind, kann eine effiziente Positions- und Lagereglung für das Fluggerät zur Verfügung gestellt werden. Das Vorsehen von mindestens zwei Rotoren pro Antriebseinheit hat darüber hinaus den Vorteil einer verbesserten Redundanz. Wenn zum Beispiel ein Rotor der Antriebseinheit während des Betriebs des Fluggeräts ausfällt, kann der verbleibende zweite Rotor ausreichenden Schub zur Verfügung stellen, um das Fluggerät zu bewegen beziehungsweise in seiner Position zu halten. Vorzugsweise sind die Elektromotoren bürstenlos und getriebelos ausgeführt. Die Mittel zur autonomen Lage- und Positionsregelung des Fluggeräts können neben einer zentralen Steuereinheit beispielsweise Kreisel- und Beschleunigungssensoren aufweisen. Ferner kann das Fluggerät vorzugsweise eines oder mehrere der nachstehend genannten Sensormittel (auch in Kombination) aufweisen:
- Drehratensensoren,
- Beschleunigungssensoren,
- barometrische Sensoren,
- magnetometrische Sensoren,
- Ultraschallsensoren,
- GPS-Sensoren,
- optische Sensoren.

In einer bevorzugten Ausführungsform besteht die Möglichkeit, dass die ersten Rotoren von wenigstens zwei Antriebseinheiten eine gemeinsame Rotationsebene aufweisen. Es besteht insbesondere auch die Möglichkeit, dass die ersten Rotoren aller Antriebseinheiten eine gemeinsame Rotationsebene aufweisen, um die Flugeigenschaften des Fluggeräts zu verbessern.

In einer bevorzugten Ausführungsform besteht die Möglichkeit, dass die zweiten Rotoren von wenigstens zwei Antriebseinheiten eine gemeinsame Rotationsebene aufweisen. Des Weiteren besteht in einer besonders bevorzugten Ausführungsform die Möglichkeit, dass die zweiten Rotoren aller Antriebseinheiten eine gemeinsame Rotationsebene aufweisen. Durch diese Maßnahme können die Flugeigenschaften des Fluggeräts weiter verbessert werden.

Die Rotationsebenen der ersten und zweiten Rotoren können insbesondere im Wesentlichen parallel zueinander orientiert sein.

Vorzugsweise sind die ersten und zweiten Rotoren mindestens einer der Antriebseinheiten in axialer Richtung voneinander beabstandet. Es besteht in einer vorteilhaften Ausführungsform auch die Möglichkeit, dass die ersten und zweiten Rotoren jeder der mindestens drei Antriebseinheiten in axialer Richtung voneinander beabstandet sind.

In einer bevorzugten Ausführungsform können die ersten und zweiten Rotoren mindestens einer der Antriebseinheiten koaxial angeordnet sein. Es ist besonders bevorzugt, dass die ersten und zweiten Rotoren jeder der mindestens drei Antriebseinheiten koaxial angeordnet sind.

Es besteht in einer vorteilhaften Ausführungsform die Möglichkeit, dass das Fluggerät einen Träger für die Antriebseinheiten aufweist, der eine Anzahl von Tragarmen umfasst, an der jeweils mindestens eine der Antriebseinheiten angebracht ist. Die Tragarme können sich zum Beispiel von einem Mittelpunkt des Trägers in radialer Richtung weg erstrecken.

Der Träger kann in einer bevorzugten Ausführungsform einen Grundkörper umfassen, an dem die Tragarme angebracht sind. Innerhalb des Grundkörpers können zum Beispiel Teile der zentralen Steuereinheit, Sensormittel, Sender- und Empfängermittel für eine Kommunikation des Fluggeräts mit einer Bodenstation untergebracht sein.

Um die Montage beziehungsweise Demontage des Fluggeräts zu vereinfachen, besteht die Möglichkeit, dass die Tragarme, insbesondere mittels Schnellverschlüssen, lösbar am Grundkörper angebracht sind.

Um Beschädigungen der Rotoren der Antriebseinheiten bei einer Kollision mit einem Hindernis zu vermeiden, sieht eine besonders bevorzugte Ausführungsform vor, dass das Fluggerät eine Kollisionsschutzeinrichtung für die Rotoren umfasst. Durch diese Maßnahme kann zum Beispiel verhindert werden, dass einer der Rotoren bei einer Berührung eines Hindernisses bricht.

Um die Demontage des Fluggeräts zu vereinfachen, besteht in einer vorteilhaften Ausführungsform die Möglichkeit, dass die Kollisionsschutzeinrichtung lösbar am Träger, insbesondere lösbar an den Tragarmen angebracht ist. Beispielsweise können eine oder mehr Steck- oder Clipsverbindungen vorgesehen sein, um die Kollisionsschutzeinrichtung lösbar an den Tragarmen anzubringen.

Die Kollisionsschutzeinrichtung kann in einer vorteilhaften Ausführungsform mindestens einen Rotorschutzring umfassen, der sich entlang des Außenumfangs des Fluggeräts erstreckt. Es besteht beispielsweise auch die Möglichkeit, dass die Kollisionsschutzeinrichtung einen ersten Rotorschutzring und einen zweiten Rotorschutzring umfasst, die sich entlang des Außenumfangs des Fluggeräts erstrecken. In einer weiteren Variante können auch mehr als zwei Rotorschutzringe vorgesehen sein. Der beziehungsweise die Rotorschutzringe können beispielsweise aus Kunststoff hergestellt sein.

Vorzugsweise sind die Rotorschutzringe im Wesentlichen parallel zueinander orientiert. Darüber hinaus können die Rotorschutzringe über eine Anzahl von Haltetraversen miteinander verbunden sein. Die Haltetraversen, die sich vorzugsweise orthogonal zur Ebene der Rotorschutzringe erstrecken, können lösbar an den Tragarmen angebracht sein.

Um Beschädigungen des Fluggeräts bei der Landung zu verhindern, kann in einer vorteilhaften Ausführungsform vorgesehen sein, dass das Fluggerät ein Landegestell aufweist, das vorzugsweise ansteckbar und damit lösbar ausgebildet ist.

Mit Hilfe des hier vorgestellten Fluggeräts können unterschiedliche Nutzlasten transportiert werden. Beispielsweise können mit dem Fluggerät eine oder mehrere Kameras und/oder Sensoren für die Umweltanalytik transportiert werden, um Luftaufnahmen zu machen oder Umweltanalyse-Daten zu erfassen.

Damit die Nutzlasten, die mittels des Fluggeräts transportiert werden können, auf einfache Weise ausgetauscht werden können, wird in einer besonders vorteilhaften Ausführungsform vorgeschlagen, dass das Fluggerät ein austauschbares Nutzlastmodul aufweist.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Darstellung des grundlegenden Funktionsprinzips eines Fluggeräts gemäß der vorliegenden Erfindung;
- Fig. 2: eine perspektivische Ansicht eines Fluggeräts gemäß einem bevorzugten Ausführungsbeispiel der vorliegenden Erfindung.

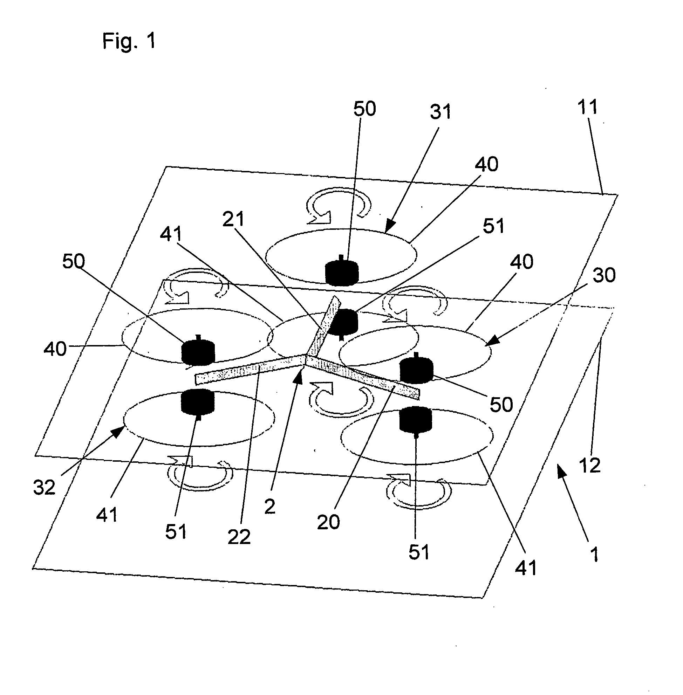

Zunächst wird auf Fig. 1 Bezug genommen, in der das grundlegende Funktionsprinzip eines Fluggeräts 1, das gemäß der vorliegenden Erfindung als so genannte Mikrodrohne ausgeführt ist, schematisch stark vereinfacht dargestellt ist.

Das Fluggerät 1 weist einen Träger 2 auf, der in diesem Ausführungsbeispiel drei Tragarme 20, 21, 22 aufweist, die sich von einem gemeinsamen Mittelpunkt in radialer Richtung nach außen erstrecken. An jedem der drei Tragarme 20, 21, 22 ist jeweils eine Antriebseinheit 30, 31, 32 angeordnet. Jede der drei Antriebseinheiten 30, 31, 32 umfasst einen ersten Rotor 40 und einen zweiten Rotor 41, die in Fig. 1 nur schematisch als Ellipsen angedeutet sind. Man erkennt, dass die ersten und zweiten Rotoren 40, 41 der Antriebseinheiten 30, 31, 32 in diesem Ausführungsbeispiel jeweils koaxial angeordnet sind. Die ersten und zweiten Rotoren 40, 41 der Antriebseinheiten 30, 31, 32 sind dabei in axialer Richtung derart voneinander beabstandet, dass während des Betriebs des Fluggeräts 1 die ersten Rotoren 40 aller Antriebseinheiten 30, 31, 32 gemeinsam in einer ersten Rotationsebene 11 und die zweiten Rotoren 41 gemeinsam in einer zweiten Rotationsebene 12 rotieren, die im Wesentlichen parallel zur ersten Rotationsebene 11 orientiert ist.

Jede der drei Antriebseinheiten 30, 31, 32 weist in diesem Ausführungsbeispiel zwei drehzahlgesteuerte, vorzugsweise getriebelos ausgeführte Elektromotoren 50, 51 auf, die insbesondere elektronisch kommutierte Gleichstrommotoren sein können. Jedem Rotor 40, 41 der Antriebseinheiten 30, 31 ist in diesem Ausführungsbeispiel somit jeweils ein drehzahlgesteuerter Elektromotor 50, 51 zugeordnet.

Während des Betriebs des Fluggeräts 1 drehen sich die ersten Rotoren 40 und die zweiten Rotoren 41 der Antriebseinheiten 30, 31 gegenläufig. Wie in Fig. 1 durch Pfeile angedeutet, können sich die ersten Rotoren 40 der drei Antriebseinheiten 30, 31, 32 in der Rotationsebene 11 beispielsweise gegen den Uhrzeigersinn drehen, während sich deren zweite Rotoren 41 in der Rotationsebene 12 im Uhrzeigersinn drehen.

Durch eine individuelle Stellung der Drehzahlen der Elektromotoren 50, 51 jeder der drei Antriebseinheiten 30, 31, 32 können sowohl die Position als auch die Bewegung des Fluggeräts 1 gesteuert werden. Das Fluggerät 1 weist zu diesem Zweck eine hier nicht explizit gezeigte zentrale Steuerungseinheit auf, die mit den drehzahlgesteuerten Elektromotoren 50, 51 gekoppelt ist, so dass diese individuell angesteuert werden können. Jedem Elektromotor 50, 51 ist vorzugsweise ein Drehzahlsteller zugeordnet, der mit der zentralen Steuerungseinheit verbunden ist, so dass die Drehzahlen sämtlicher Elektromotoren 50, 51 der Antriebseinheiten 30, 31, 32 individuell gesteuert verändert werden können. Zur Erfassung von Flug- und Betriebsdaten des Fluggeräts 1 sind geeignete Sensormittel vorgesehen, auf die weiter unten noch näher eingegangen werden soll.

Durch die vorstehend beschriebenen Maßnahmen und durch eine entsprechende programmtechnische Einrichtung der Software der zentralen Steuerungseinheit kann eine autonome Lage- und Positionsregelung des Fluggeräts 1 erreicht werden. Das hier vorgestellte Fluggerät 1 kann zum Beispiel einen Schwebeflug durchführen. Die zentrale Steuerungseinheit erlaubt die Steuerbarkeit des Fluggeräts 1 in allen drei Raumrichtungen und darüber hinaus eine Drehung des Fluggeräts 1 um dessen Hochachse. Dies erfolgt durch eine individuelle Änderung und Anpassung der Drehzahlen der Elektromotoren 50, 51 der Antriebseinheiten 30, 31, 32 an die jeweilige Flugsituation.

Durch den konstruktiven Aufbau des Fluggeräts 1 mit drei Antriebseinheiten 30, 31, 32 mit jeweils zwei koaxial angeordneten Rotoren 40, 41, die sich während des Betriebs gegenläufig in entgegengesetzten Drehrichtungen drehen, kann ein Fluggerät 1 zur Verfügung gestellt werden, das eine im Vergleich zu den aus dem Stand der Technik bekannten Fluggeräten, die üblicherweise vier oder mehr Antriebseinheiten aufweisen, kompaktere Bauform besitzt. Dadurch kann erreicht werden, dass eine große Nutzlast über eine vergleichsweise lange Flugzeit bewegt werden kann. Das Vorsehen von zwei drehzahlgesteuerten Elektromotoren 50, 51 pro Antriebseinheit 30, 31 hat darüber hinaus den Vorteil, dass das Fluggerät 1 eine verbesserte Redundanz besitzt. Fällt zum Beispiel einer der drehzahlgesteuerten Elektromotoren 50, 51 einer der Antriebseinheiten 30, 31, 32 aus, kann der zweite Elektromotor 50, 51 noch ausreichend Schub zur Verfügung stellen, um zu verhindern, dass das Fluggerät 1 unkontrollierbar wird und beispielsweise abstürzt.

Wie bereits oben erwähnt, weist das Fluggerät 1 mehrere Sensormittel auf, damit zum Beispiel die Position des Fluggeräts 1 sowie die aktuellen Flug- und Betriebsdaten erfasst werden können. Zum Beispiel kann das Fluggerät 1 eines oder mehrere der nachstehend genannten Sensormittel (auch in Kombination) aufweisen:
- Drehratensensoren
- Beschleunigungssensoren,
- barometrische Sensoren,
- magnetometrische Sensoren,
- Ultraschallsensoren,
- GPS-Sensoren,
- optische Sensoren.

Die während des Betriebs des Fluggeräts 1 von den Sensormitteln erfassten Messdaten werden der zentralen Steuerungseinheit zugeführt und von dieser weiterverarbeitet. Sofern erforderlich, sendet die zentrale Steuerungseinheit dann individuelle Stellsignale an die Elektromotoren 50, 51, der Antriebseinheiten 30, 31, 32, um deren Drehzahlen individuell zu ändern.

Mit Hilfe des hier vorgestellten Fluggeräts 1 können unterschiedliche Nutzlasten, wie zum Beispiel eine oder mehrere Kameras oder Sensoren zur Erfassung von Umweltdaten (Gassensoren, radiologische Sensoren oder dergleichen), transportiert werden. Vorzugsweise weist das Fluggerät 1 ein austauschbares Nutzlastmodul auf, das insbesondere lösbar am Träger 2 angebracht sein kann, damit die Nutzlast einfach und schnell ausgetauscht werden kann.

Ferner umfasst das Fluggerät 1 Sender- und Empfängermittel, die dazu geeignet sind, Daten (beispielsweise ein Videosignal der Kamera und/oder Sensorsignale) vom Fluggerät 1 zu einer Bodensende- und -empfangsstation zu übertragen beziehungsweise Steuersignale von der Bodensende- und -empfangsstation zu empfangen.

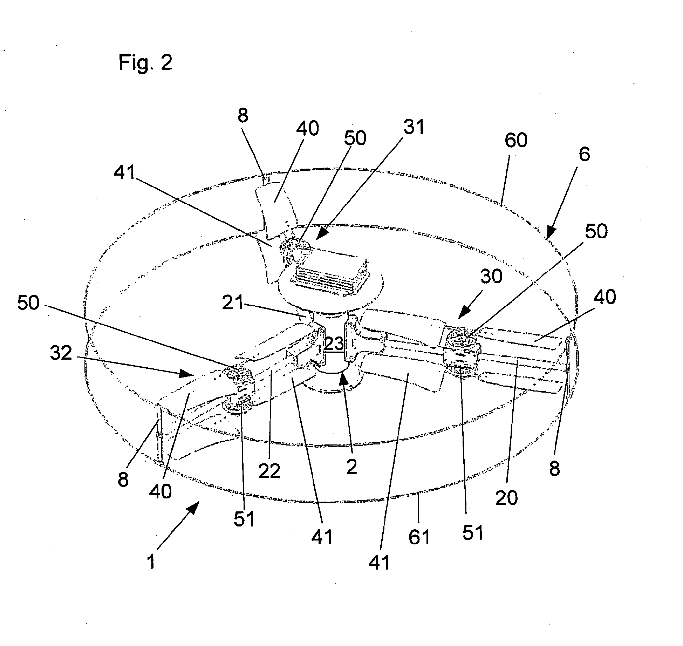

In Fig. 2 ist ein bevorzugtes Ausführungsbeispiel des in Fig. 1 lediglich schematisch stark vereinfacht dargestellten Fluggeräts 1 perspektivisch gezeigt. Das Fluggerät 1 ist eine Mikrodrohne, die hinsichtlich ihrer Baugröße so kompakt ausgeführt ist, dass sie beispielsweise auch in Gebäude einfliegen kann.

Man erkennt wiederum einen Träger 2, der in diesem Ausführungsbeispiel einen zentralen, im Wesentlichen zylindrisch geformten Grundkörper 23 aufweist. An einer äußeren Mantelfläche des Grundkörpers 23 sind drei Tragarme 20, 21, 22 angebracht, die sich in radialer Richtung vom Grundkörper 23 weg erstrecken. Damit das Fluggerät 1 bei Bedarf wieder demontiert werden kann, sind die drei Tragarme 20, 21, 22 in diesem Ausführungsbeispiel lösbar am Grundkörper 23 angebracht. Um die Montage beziehungsweise die Demontage des Fluggeräts 1 zu vereinfachen, können die Tragarme 20, 21, 22 vorzugsweise mit Hilfe von Schnellverschlüssen formschlüssig am Grundkörper 23 angebracht sein.

An jedem der drei Tragarme 20, 21, 22 ist wiederum eine von insgesamt drei Antriebseinheiten 30, 31, 32 angebracht. Jede der drei Antriebseinheiten 30, 31, 32 umfasst jeweils einen ersten zweiblättrigen Rotor 40 und einen zweiten zweiblättrigen Rotor 41, der vom ersten Rotor 40 beabstandet ist. Die beiden Rotoren 40, 41 der Antriebseinheiten 30, 31, 32 sind jeweils koaxial übereinander angeordnet, wobei während des Betriebs des Fluggeräts 1 gemäß dem oben unter Bezugnahme auf Fig. 1 erläuterten grundlegenden Funktionsprinzip die ersten Rotoren 40 aller Antriebseinheiten 30, 31, 32 in einer gemeinsamen Rotationsebene rotieren und die zweiten Rotoren 41 der Antriebseinheiten 30, 31, 32 ebenfalls in einer gemeinsamen Rotationsebene rotieren.

Jede der drei Antriebseinheiten 30, 31, 32 weist zwei drehzahlgesteuerte Elektromotoren 50, 51 auf, die jeweils einem der beiden Rotoren 40, 41 zugeordnet sind und diese während des Betriebs des Fluggeräts 1 unabhängig voneinander antreiben und in Rotation versetzen. Die drehzahlgesteuerten Elektromotoren 50, 51, die vorzugsweise getriebelos ausgeführt sind, können insbesondere elektronisch kommutierte Gleichstrommotoren sein. Wie oben bereits erwähnt, werden während des Betriebs des Fluggeräts 1 jeweils die ersten Rotoren 40 der Antriebseinheiten 30, 31, 32 gegenläufig zu den zweiten Rotoren 41 angetrieben. Die Gleichstrommotoren 50, 51 werden von der zentralen Steuerungseinheit des Fluggeräts 1 individuell angesteuert, um gegebenenfalls deren Drehzahlen zu verändern.

Um die Montage der Rotoren 40, 41 an den Tragarmen 20, 21, 22 zu vereinfachen, können vorzugsweise werkzeugfreie Montagemittel vorgesehen sein. Beispielsweise können Nuten mit einem O-Ring vorgesehen seinen, die sich jeweils um einen Mitnehmerzapfen der Elektromotoren 50, 51 erstrecken. Der Grundkörper 23 kann beispielsweise eine elektrische Kennung zur Kodierung der Elektromotoren 50, 51 aufweisen, um dadurch den Zusammenbau des Fluggeräts 1 zu erleichtern.

Ferner weist das Fluggerät 1 ein Gehäuse 7 auf, in dem beispielsweise die Nutzlast, wie zum Beispiel eine Kamera, Sensoren zur Erfassung von Umweltdaten oder dergleichen, untergebracht sein können. Im Gehäuse 7 oder im Grundkörper 23 des Trägers 1 können beispielsweise die zentrale Steuerungseinheit, ein oder mehrere Sensormittel sowie Sender- und Empfängermittel untergebracht sein.

Damit die Position sowie aktuelle Flugdaten des Fluggeräts 1 erfasst werden können, weist dieses eines oder mehrere der nachstehend beispielhaft aufgeführten Sensormittel (auch in Kombination) auf:
- Drehratensensoren
- Beschleunigungssensoren,
- barometrische Sensoren,
- magnetometrische Sensoren,
- Ultraschallsensoren,
- GPS-Sensoren,
- optische Sensoren.

Damit eine Beschädigung der Rotoren 40, 41 bei einer Kollision mit einem Hindernis vermieden werden kann, weist das Fluggerät 1 in diesem Ausführungsbeispiel eine Rotorschutzeinrichtung 6 auf, die sich entlang des Außenumfangs des Fluggeräts 1 erstreckt. Die Rotorschutzeinrichtung 6 weist einen ersten Rotorschutzring 60 und einen zweiten Rotorschutzring 61 auf, die mit Hilfe von drei Haltetraversen 8 in axialer Richtung voneinander beabstandet sind. Die beiden Schutzringe 60, 61 sind vorzugsweise lösbar - beispielsweise über eine Steck- oder Clipsverbindung - an den Haltetraversen 8 angebracht. Die Haltetraversen 8 können ihrerseits ebenfalls lösbar - beispielsweise über eine Steck- oder eine Clipsverbindung - an den Tragarmen 20, 21, 22 angebracht sein.

Das Fluggerät 1 kann an seiner Unterseite ferner ein hier nicht explizit dargestelltes, vorzugsweise ansteckbares Landegestell umfassen, das unter anderem eine Beschädigung des Fluggeräts 1 bei der Landung verhindern kann.

## Patentansprüche

1. Fluggerät (1), umfassend
- mindestens drei Antriebseinheiten (30, 31, 32), die jeweils einen ersten Rotor (40) und einen ersten drehzahlgesteuerten Elektromotor (50) aufweisen, geeignet, den ersten Rotor (40) während des Betriebs des Fluggeräts (1) anzutreiben,
- Mittel zur autonomen Lage- und Positionsregelung des Fluggeräts (1),
**dadurch gekennzeichnet, dass** jede der Antriebseinheiten (30, 31, 32) mindestens einen zweiten Rotor (41) und mindestens einen zweiten drehzahlgesteuerten Elektromotor (51) aufweist, geeignet, den zweiten Rotor (41) während des Betriebs des Fluggeräts (1) in einer Drehrichtung anzutreiben, die entgegengesetzt zur Drehrichtung des ersten Rotors (40) der jeweiligen Antriebseinheit (30, 31, 32) ist, wobei die Drehzahlen der Elektromotoren (50, 51) jeder der mindestens drei Antriebseinheiten (30, 31, 32) individuell veränderbar sind.

2. Fluggerät (1) nach Anspruch 1 , **dadurch gekennzeichnet, dass** die ersten Rotoren (40) von wenigstens zwei Antriebseinheiten (30, 31, 32), vorzugsweise die ersten Rotoren (40) aller Antriebseinheiten (30, 31, 32), eine gemeinsame Rotationsebene (11) aufweisen.

3. Fluggerät (1) nach einem der Ansprüche 1 oder 2, **dadurch gekennzeichnet, dass** die zweiten Rotoren (41) von wenigstens zwei Antriebseinheiten (30, 31, 32), vorzugsweise die zweiten Rotoren (41) aller Antriebseinheiten (30, 31, 32), eine gemeinsame Rotationsebene (12) aufweisen.

4. Fluggerät (1) nach Anspruch 3, **dadurch gekennzeichnet, dass** die Rotationsebenen (11, 12) der ersten und zweiten Rotoren (40, 41) im Wesentlichen parallel zueinander orientiert sind.

5. Fluggerät (1) nach einem der Ansprüche 1 bis 4, **dadurch gekennzeichnet, dass** die ersten und zweiten Rotoren (40, 41) mindestens einer der Antriebseinheiten (30, 31, 32), vorzugsweise jeder der mindestens drei Antriebseinheiten (30, 31, 32), in axialer Richtung voneinander beabstandet sind.

6. Fluggerät (1) nach einem der Ansprüche 1 bis 5, **dadurch gekennzeichnet, dass** die ersten und zweiten Rotoren (40, 41) mindestens einer der Antriebseinheiten (30, 31, 32), vorzugsweise jeder der Antriebseinheiten (30, 31, 32), koaxial angeordnet sind.

7. Fluggerät (1) nach einem der Ansprüche 1 bis 6, **dadurch gekennzeichnet, dass** das Fluggerät (1) einen Träger (2) für die Antriebseinheiten (30, 31, 32) aufweist, der eine Anzahl von Tragarmen (20, 21, 22) umfasst, an denen jeweils mindestens eine der Antriebseinheiten (30, 31) angebracht ist und die sich vorzugsweise von einem Mittelpunkt des Trägers (2) in radialer Richtung weg erstrecken.

8. Fluggerät (1) nach Anspruch 7, **dadurch gekennzeichnet, dass** der Träger (2) einen Grundkörper (23) umfasst, an dem die Tragarme (20, 21, 22) angebracht sind.

9. Fluggerät (1) nach Anspruch 8, **dadurch gekennzeichnet, dass** die Tragarme (20, 21, 22), insbesondere mittels Schnellverschlüssen, lösbar am Grundkörper (23) angebracht sind.

10. Fluggerät (1) nach einem der Ansprüche 1 bis 9, **dadurch gekennzeichnet, dass** das Fluggerät (1) eine Kollisionsschutzeinrichtung (6) für die Rotoren (40, 41) umfasst, die vorzugsweise lösbar am Träger (2), insbesondere lösbar an den Tragarmen (20, 21, 22), angebracht ist.

11. Fluggerät (1) nach Anspruch 10, **dadurch gekennzeichnet, dass** die Kollisionsschutzeinrichtung (6) mindestens einen Rotorschutzring (60, 61) umfasst, der sich entlang des Außenumfangs des Fluggeräts (1) erstreckt.

12. Fluggerät (1) nach einem der Ansprüche 10 oder 11, **dadurch gekennzeichnet, dass** die Kollisionsschutzeinrichtung (6) einen ersten Rotorschutzring (60) und einen zweiten Rotorschutzring (61) umfasst, die sich entlang des Außenumfangs des Fluggeräts (1) erstrecken und vorzugsweise im Wesentlichen parallel zueinander orientiert sind.

13. Fluggerät (1) nach Anspruch 12, **dadurch gekennzeichnet, dass** die Rotorschutzringe (60, 61) über eine Anzahl von Haltetraversen (8) miteinander verbunden sind, die vorzugsweise lösbar an den Tragarmen (20, 21, 22) angebracht sind.

14. Fluggerät (1) nach einem der Ansprüche 1 bis 13, **dadurch gekennzeichnet, dass** das Fluggerät (1) ein Landegestell aufweist.

15. Fluggerät (1) nach einem der Ansprüche 1 bis 14, **dadurch gekennzeichnet, dass** das Fluggerät (1) ein austauschbares Nutzlastmodul aufweist.

## Claims

1. Aircraft (1) comprising
- at least three drive units (30, 31, 32), which each have a first rotor (40) and a first electric motor (50) whose rotation speed is controlled, suitable for driving the first rotor (40) during operation of the aircraft (1),
- means for autonomous attitude and position control of the aircraft (1),
**characterized in that** each of the drive units (30, 31, 32) has at least one second rotor (41) and at least one second electric motor (51) whose rotation speed is controlled, suitable for driving the second rotor (41) during operation of the aircraft (1), in a rotation direction which is opposite the rotation direction of the first rotor (40) of the respective drive unit (30, 31, 32), the rotation speeds of the electrics motors (50, 51) of each of the at least three drive units (30, 31, 32) are varied individually.

2. Aircraft (1) according to claim 1, **characterized in that** the first rotors (40) of at least two drive units (30, 31, 32), preferably the first rotors (40) of all the drive units (30, 31, 32), have a common rotation plane (11).

3. Aircraft (1) according to one of claims 1 or 2, **characterized in that** the second rotors (41) of at least two drive units (30, 31, 32), preferably the second rotors (41) of all the drive units (30, 31, 32), have a common rotation plane (12).

4. Aircraft (1) according to claim 3, **characterized in that** the rotation planes (11, 12) of the first and second rotors (40, 41) are oriented essentially parallel to one another.

5. Aircraft (1) according to one of claims 1 to 4, **characterized in that** the first and second rotors (40, 41) of at least one of the drive units (30, 31, 32), preferably of each of the at least three drive units (30, 31, 32), are separated from one another in the axial direction.

6. Aircraft (1) according to one of claims 1 to 5, **characterized in that** the first and second rotors (40, 41) of at least one of the drive units (30, 31, 32), preferably of each of the drive units (30, 31, 32), are arranged coaxially.

7. Aircraft (1) according to one of claims 1 to 6, **characterized in that** the aircraft (1) has a support (2) for the drive units (30, 31, 32), which support (2) comprises a number of supporting arms (20, 21, 22) to each of which at least one of the drive units (30, 31) is fitted and the supporting arms (20, 21, 22) preferably extend away from a centerpoint of the support (2) in the radial direction.

8. Aircraft (1) according to claim 7, **characterized in that** the support (2) comprises a base body (23) to which the supporting arms (20, 21, 22) are fitted.

9. Aircraft (1) according to claim 8, **characterized in that** the supporting arms (20, 21, 22) are detachably fitted to the base body (23), in particular by means of quick-release fasteners.

10. Aircraft (1) according to one of claims 1 to 9, **characterized in that** the aircraft (1) comprises a collision protection device (6) for the rotors (40, 41), the collision protection device (6) is preferably detachably fitted to the support (2) and in particular is detachably fitted to the supporting arms (20, 21, 22).

11. Aircraft (1) according to claim 10, **characterized in that** the collision protection device (6) comprises at least one rotor protection ring (60, 61) which extends along the outer circumference of the aircraft (1).

12. Aircraft (1) according to one of claims 10 or 11, **characterized in that** the collision protection device (6) comprises a first rotor protection ring (60) and a second rotor protection ring (61), which extend along the outer circumference of the aircraft (1) and the rotor protection rings (60, 61) are preferably oriented essentially parallel to one another.

13. Aircraft (1) according to claim 12, **characterized in that** the rotor protection rings (60, 61) are connected to one another by a number of holding crossmembers (8), the holding crossmembers (8) are preferably detachably fitted to the supporting arms (20, 21, 22).

14. Aircraft (1) according to one of claims 1 to 13, **characterized in that** the aircraft (1) has a landing frame.

15. Aircraft (1) according to one of claims 1 to 14, **characterized in that** the aircraft (1) has an interchangeable payload module.

## Revendications

1. Aéronef (1), comprenant :
- au moins trois unités d'entraînement (30, 31, 32), qui présentent chacune un premier rotor (40) et un premier moteur électrique (50) commandé en régime, approprié pour entraîner le premier rotor (40) pendant le fonctionnement de l'aéronef (1),
- des moyens pour la régulation autonome de l'assiette et de la position de l'aéronef (1),
**caractérisé en ce que** chacune des unités d'entraînement (30, 31, 32) présente au moins un deuxième rotor (41) et au moins un deuxième moteur électrique (51) commandé en régime, approprié pour entraîner le deuxième rotor (41) pendant le fonctionnement de l'aéronef (1) dans un sens de rotation qui est opposé au sens de rotation du premier rotor (40) de l'unité d'entraînement respective (30, 31, 32), les régimes des moteurs électriques (50, 51) de chacune des au moins trois unités d'entraînement (30, 31, 32) pouvant être modifiés individuellement.

2. Aéronef (1) selon la revendication 1, **caractérisé en ce que** les premiers rotors (40) d'au moins deux unités d'entraînement (30, 31, 32), de préférence les premiers rotors (40) de toutes les unités d'entraînement (30, 31, 32), présentent un plan de rotation commun (11).

3. Aéronef (1) selon l'une quelconque des revendications 1 ou 2, **caractérisé en ce que** les deuxièmes rotors (41) d'au moins deux unités d'entraînement (30, 31, 32), de préférence les deuxièmes rotors (41) de toutes les unités d'entraînement (30, 31, 32), présentent un plan de rotation commun (12).

4. Aéronef (1) selon la revendication 3, **caractérisé en ce que** les plans de rotation (11, 12) des premiers et deuxièmes rotors (40, 41) sont orientés de manière essentiellement parallèle l'un à l'autre.

5. Aéronef (1) selon l'une quelconque des revendications 1 à 4, **caractérisé en ce que** les premiers et deuxièmes rotors (40, 41) d'au moins l'une des unités d'entraînement (30, 31, 32), de préférence de chacune des au moins trois unités d'entraînement (30, 31, 32), sont espacés les uns des autres dans la direction axiale.

6. Aéronef (1) selon l'une quelconque des revendications 1 à 5, **caractérisé en ce que** les premiers et deuxièmes rotors (40, 41) d'au moins l'une des unités d'entraînement (30, 31, 32), de préférence de chacune des unités d'entraînement (30, 31, 32), sont disposés coaxialement.

7. Aéronef (1) selon l'une quelconque des revendications 1 à 6, **caractérisé en ce que** l'aéronef (1) présente un support (2) pour les unités d'entraînement (30, 31, 32), qui comprend un certain nombre de bras de support (20, 21, 22), sur lesquels est montée à chaque fois au moins l'une des unités d'entraînement (30, 31), et qui s'étendent de préférence depuis un centre du support (2) dans la direction radiale.

8. Aéronef (1) selon la revendication 7, **caractérisé en ce que** le support (2) comprend un corps de base (23) sur lequel sont montés les bras de support (20, 21, 22).

9. Aéronef (1) selon la revendication 8, **caractérisé en ce que** les bras de support (20, 21, 22) sont montés de manière détachable sur le corps de base (23), en particulier au moyen de raccords rapides.

10. Aéronef (1) selon l'une quelconque des revendications 1 à 9, **caractérisé en ce que** l'aéronef (1) comprend un dispositif de protection anticollision (6) pour les rotors (40, 41), qui est monté de préférence de manière détachable sur le support (2), notamment de manière détachable sur les bras de support (20, 21, 22).

11. Aéronef (1) selon la revendication 10, **caractérisé en ce que** le dispositif de protection anticollision (6) comprend au moins une bague de protection de rotor (60, 61), qui s'étend le long de la périphérie extérieure de l'aéronef (1).

12. Aéronef (1) selon l'une quelconque des revendications 10 ou 11, **caractérisé en ce que** le dispositif de protection anticollision (6) comprend une première bague de protection de rotor (60) et une deuxième bague de protection de rotor (61), qui s'étendent le long de la périphérie extérieure de l'aéronef (1) et qui sont orientées de préférence essentiellement parallèlement l'une à l'autre.

13. Aéronef (1) selon la revendication 12, **caractérisé en ce que** les bagues de protection de rotor (60, 61) sont connectées l'une à l'autre par une pluralité de traverses de retenue (8), qui sont montées de préférence de manière détachable sur les bras de support (20, 21, 22).

14. Aéronef (1) selon l'une quelconque des revendications 1 à 13, **caractérisé en ce que** l'aéronef (1) présente un atterrisseur.

15. Aéronef (1) selon l'une quelconque des revendications 1 à 14, **caractérisé en ce que** l'aéronef (1) présente un module de charge utile remplaçable.
